# EUROPÄISCHE PATENTSCHRIFT

(11) **EP 0 872 268 B1**
(45) Veröffentlichungstag und Bekanntmachung des Hinweises auf die Patenterteilung: **05.11.2003**
(21) Anmeldenummer: 98106636.8
(22) Anmeldetag: 09.04.1998
(51) Int. Cl.: B01D 46/24, F02M 35/024

(54) **Filtermodulsystem**
Filter module system
Système à filtre modulaire

(30) Priorität: 16.04.1997 DE 19715960
(43) Veröffentlichungstag der Anmeldung: 21.10.1998
(73) Patentinhaber: FILTERWERK MANN + HUMMEL GMBH, 71638 Ludwigsburg (DE)
(72) Erfinder: Greif, Volker, 71069 Sindelfingen (DE); Kochert, Stefan, 71384 Weinstadt (DE); Mössinger, Klaus, 74182 Obersulm (DE); Müller, Armin, 71686 Remseck (DE); Spaeth, Bernd, 89073 Ulm (DE)
(74) Vertreter: Voth, Gerhard, Dipl.-Ing.

(56) Entgegenhaltungen:
- WO-A-96/37277
- DE-A- 19 521 898
- US-A- 5 120 337
- US-A- 5 586 996

## Beschreibung

Es wird ein Filter, insbesondere ein Luftfilter für die Ansaugluft von Brennkraftmaschinen vorgeschlagen. Solche Filter sind allgemein bekannt und bestehen üblicherweise aus einem thermoplastischen Gehäuse, in welches ein Filterelemente, beispielsweise ein zick-zack-förmig gefaltetes Flachfilterelement eingesetzt wird. Das Filterelement ist mit einem umlaufenden Dichtrand versehen, wobei dieser Dichtrand in die Trennebene zwischen Gehäuse und Deckel eingespannt wird und die Abdichtung der Bauteile bewirkt.

Ein Nachteil bei den bekannten System liegt darin, dass für jeden Anwendungsfall ein auf die Leistung der Brennkraftmaschine abgestimmtes Filterelement erforderlich ist. Dies bedeutet, dass auch die gesamte Filterumgebung abgestimmt werden muss, da das Volumen des Filtergehäuses gleichzeitig auch schalldämpfende Eigenschaften besitzen muss und damit ebenfalls auf die Leistung der Brennkraftmaschine abzustimmen ist. Dies bedeutet ferner, dass jede Brennkraftmaschine ein jeweils individuell auf deren Leistung abgestimmtes System benötigt. Dies führt zwangsläufig zu einem hohen Werkzeugaufwand, der nur bei einer entsprechend hohen Stückzahl an herzustellenden Teilen gerechtfertigt ist.

Die US-A-5 120 337 beschreibt ein Luftfiltersystem, bei welchem ein Haupt- und ein Sekundärluftfilterelement vorgesehen ist. Das Hauptfilterelement wird reinluftseitig an einem Stutzen befestigt und ist mit einer Radialdichtung zur Trennung von Rohluftraum und Reinluftraum versehen.

Aus der US-A-5 586 996 ist eine Einrichtung zur Ölabscheidung bekannt. Diese Einrichtung besteht aus mehreren ineinander kombinierten Bauteilen, insbesondere einem Filtervlies, welches zwischen zwei Endscheiben angeordnet ist und mit einem Stützrohr versehen wird.

Es ist ferner aus der DE-A-195 21 898 eine Filterpatrone, insbesondere für einen Ansaugluftfilter einer Brennkraftmaschine bekannt. Diese Filterpatrone besteht aus einem hohlzylindrischen Filterkörper, der an wenigstens einer Stirnseite mit einer Endscheibe versehen ist, wobei diese Endscheibe ein Dichtelement aufweist. Die Endscheibe ist unmittelbar mit dem Filterkörper verbunden.

Der Erfindung liegt die Aufgabe zugrunde, ein System für den Zusammenbau eines Luftfilters zu schaffen, mit dem ein Luftfilter in einfacher Weise an die Leistung der jeweiligen Brennkraftmaschine angepasst werden kann und wobei gleichzeitig hohe Herstellkosten vermieden werden.

Diese Aufgabe wird durch die Merkmale des unabhängigen Anspruchs 1 gelöst.

Der Kerngedanke der Erfindung liegt in der Schaffung eines Baukastensystems. Dies bedeutet, dass unter Zugrundelegung eines einheitlichen Gehäuses bzw. einer einheitlichen Grundstruktur Varianten von Elementen an diese Grundstruktur angekoppelt werden können und damit ein optimal an die jeweilige Brennkraftmaschine abgestimmtes Filter mit geringem fertigungstechnischem Aufwand hergestellt werden kann.

So ist es beispielsweise möglich, den Rohlufteinlass oder den Reinluftauslass als adaptierbares Element zu gestalten und über geeignete Verbindungselemente an dem Gehäuse zu befestigen. Dabei lassen sich die Anschlusselement an die jeweils an der Brennkraftmaschine vorhandene Struktur in einfacher Weise anpassen.

Gemäß einer Ausgestaltung der Erfindung kann die wirksame Filterfläche dadurch variiert werden, dass das Filterelement mit unterschiedlichen Baulängen ausgestattet wird. Diese einfache Form der Variation benötigt lediglich einen darauf abgestimmten Deckel, d. h. lediglich die Länge bzw. Höhe des Deckels ist an unterschiedliche Baugrößen anzupassen.

Das Filterelement selbst kann sowohl aus zick-zack-förmig gefaltetem Filterpapier oder Vlies hergestellt werden. Es besteht auch die Möglichkeit, ein Schaumstofffilterelement zu verwenden, das bei entsprechender Dotierung als Nassluftfilter einen hohen Staubabscheidegrad aufweist.

Ein weiteres im Baukastensystem zu verwendendes Element ist beispielsweise ein Dämpferrohr, welches akustisch wirksam bestimmte Frequenzen des Ansauggeräusches herausfiltert. Auch dieses Dämpferrohr kann in der Größe variieren und damit auf die Brennkraftmaschine abgestimmt werden.

Eine besonders einfache Gestaltung und auch eine besonders einfache Montage der einzelnen Teile wird durch die Verwendung von thermoplastischem Kunststoff gewährleistet. Durch entsprechende Formgebung können die Teile beispielsweise miteinander verrastet oder verschweißt werden. Es besteht auch die Möglichkeit, Teile, die gelegentlich ausgetauscht werden müssen, mit einem Bajonettverschluss zu versehen oder mit Filmscharnieren und Schnappverschlüssen auszurüsten.

Diese und weitere Merkmale von bevorzugten Weiterbildungen der Erfindung gehen außer aus den Ansprüchen auch aus der Beschreibung und den Zeichnungen hervor

Die Erfindung wird nachfolgend anhand eines Ausführungsbeispiels näher erläutert. Es zeigt:
- Figur 1: den Schnitt durch ein Filter,
- Figur 2: in einer Explosionsdarstellung verschiedene Anschlusselemente,
- Figur 3: ein Filter mit einem Nassluftfilterelement,
- Figur 4: ein Filter mit Dämpferrohr,
- Figur 5: ein Filter mit innenliegendem Anschlusselement,
- Figur 6: ein Filter mit einer ersten Anschlussvariante,
- Figur 7: ein Filter mit einer zweiten Anschlussvariante für die Rohluft.

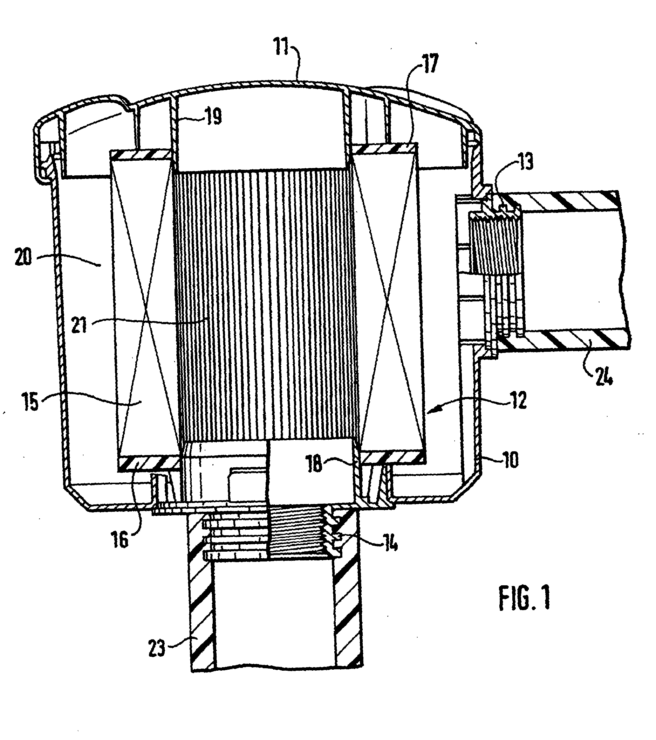

Das Filter besteht, wie in Figur 1 gezeigt, aus einem Filtergehäuse 10, einem Filterdeckel 11 und einem in dem Gehäuse angeordneten Filterelement 12. Das Filtersystem ist in Modulbauweise aufgebaut, d. h. ein Anschlusselement 13 zur Zuführung der Rohluft ist mit dem Filtergehäuse verrastet oder - sofern das Filtergehäuse und das Anschlusselement 13 aus thermoplastischem Kunststoff bestehen - verschweißt. Ein Anschlusselement 14 für die ausströmende Reinluft ist ebenfalls mit dem Filtergehäuse verschnappt oder verschweißt. Der Deckel ist bevorzugt mit einem Bajonettverschluss auf dem Filtergehäuse 10 befestigt.

Das in dem Filtergehäuse 10 angeordnete Filterelement 12 besteht aus einem zick-zack-förmig gefaltetem Filterpapierelement 15. Dieses trägt an den Stirnseiten Endscheiben 16, 17 aus thermoplastischem Kunststoff. Diese Endscheiben bilden in Verbindung mit den beiden Flanschteilen 18, 19 die Abdichtung zwischen Rohluftraum 20 und Reinluftraum 21. Der Deckel 11 kann sowohl wie bereits erwähnt mit einem Bajonettverschluß als auch mit einem Schraubverschluß auf dem Filtergehäuse befestigt werden. Selbstverständlich besteht auch die Möglichkeit, über eine Rastverbindung den Deckel an dem Gehäuse zu befestigen.

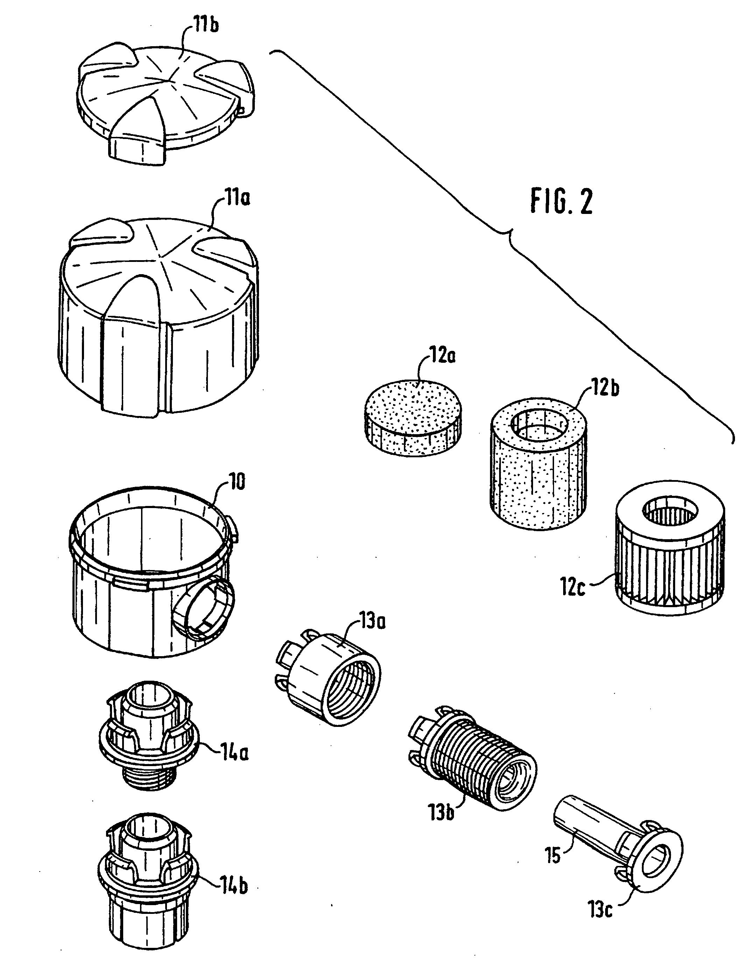

Figur 2 zeigt verschiedene Anschlußelemente, die in unterschiedlichen Varianten verbunden werden und verschiedene Varianten des Filtersystems bilden. So ist an das Filtergehäuse 10 jeweils ein Filterdeckel 11a, 11b mit unterschiedlicher Höhe, ein Anschlußelement 14a, 16b mit Schraubgewinde oder Steckanschluß sowie ein Anschlußelement 13a, 13b, 13c mit einer Innenverschraubung, mit einer Außenverschraubung oder mit einem sich in das Filtergehäuse erstreckenden Dämpferrohr 15 adaptierbar. Das Filterelement 12 kann beispielsweise aus einem einfachen Schaumstoffeinsatz 12a, aus einem hohlzylindrischen Element 12b oder aus einem aus zick-zack-förmig gefaltetem Papier bestehenden Sternfilterelement 12c bestehen. Die Anschlußteile sind mit Rastelementen versehen. Diese sind derart ausgestaltet, daß nach dem Zusammenbau des Gehäuses mit den Anschlußteilen ein Lösen nicht mehr möglich ist. Dadurch wird ein unbeabsichtigtes Demontieren wirksam verhindert.

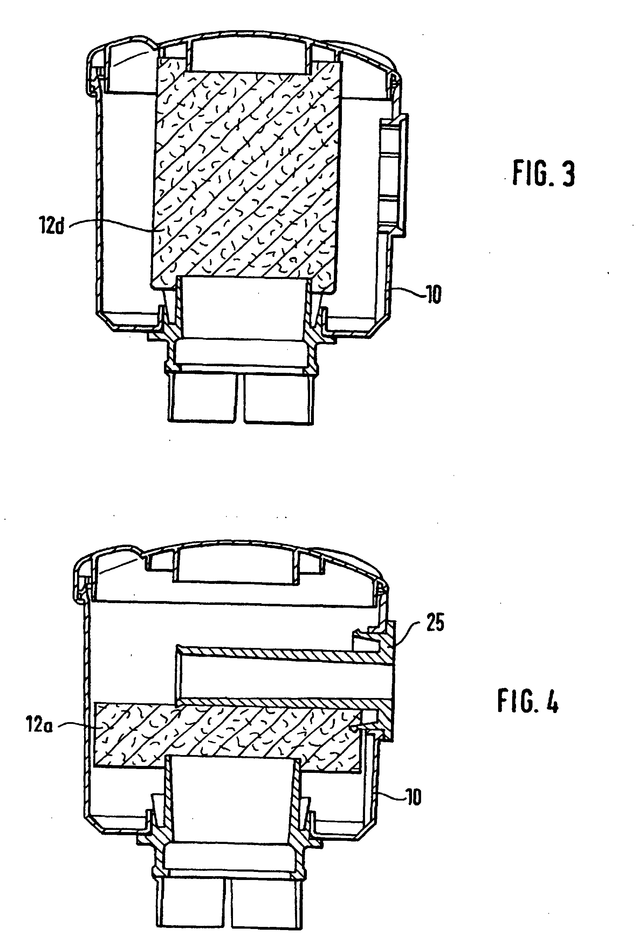

Figur 3 zeigt ein Gehäuse 10, in welches ein Naßluftfilterelement 12d eingebaut ist. Das Naßluftfilterelement ist beispielsweise ein Schaumstoffformteil, dessen Gestaltung eine wirksame Abdichtung zwischen Rohluftbereich und Reinluftbereich schafft.

In Figur 4 ist ein Filterelement in Form einer einfachen Platte 12a dargestellt. Dieses ist in bevorzugter Weise ein Schaumstoffelement oder ein Vliesteil. Am Rohlufteinlaß ist ein Dämpferrohr 25 eingeclipst. Dieses Dämpferrohr dient zur Verringerung des Ansauggeräusches der Brennkraftmaschine.

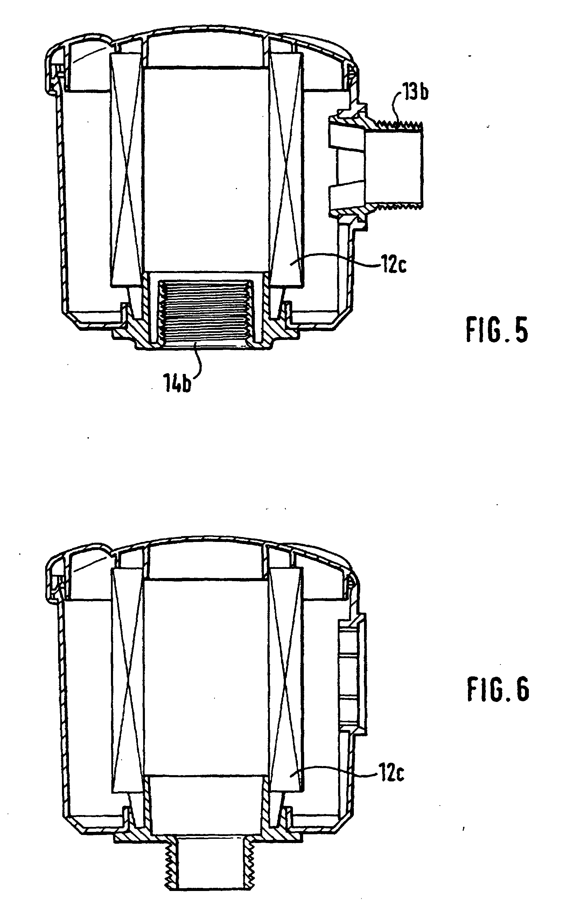

Figur 5 zeigt ein Filterelement 12c, das aus einem zick-zack-förmig gefalteten Filterpapier besteht, wobei der Anschluß für die Rohluft über das Anschlußelement 13b, einem Anschluß mit außenliegendem Befestigungsgewinde erfolgt und der Anschluß für die Reinluft mit einem Anschlußelement 14b mit Innengewinde erfolgt. Dieser Aufbau ermöglicht eine kompakte Anordnung des Ansaugbereichs der Brennkraftmaschine. Das Filterelement kann unmittelbar am Drosselstutzen befestigt werden.

Figur 6 zeigt eine Variante bezüglich des Anschlusses für die Rohluft. Hier ist ein kurzer Anschlußstutzen vorgesehen. Es besteht auch die Möglichkeit, die Öffnung für die Rohluft mit einem Gitter zu versehen und auf ein Rohluftrohr zu verzichten.

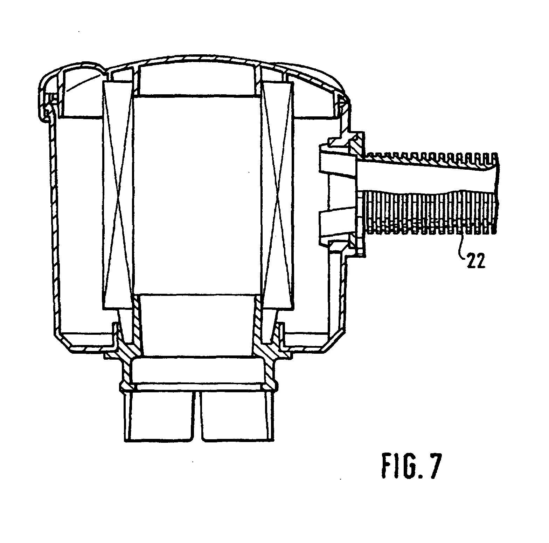

Figur 7 zeigt eine weitere Anschlußform für die Rohluft. Hier ist bereits an dem Anschlußelement ein Rohluftschlauch 22 angeordnet.

## Patentansprüche

1. Baukastensystem für den Zusammenbau eines Luftfilters für die Ansaugluft von Brennkraftmaschinen, wobei das Baukastensystem folgende Elemente aufweist:
- ein Gehäuse (10) mit einer ersten Öffnung für den Rohlufteintritt, einer zweiten Öffnung für den Reinluftaustritt und einer dritten Öffnung zum Austauschen von Filterelementen,
- mindestens zwei wahlweise verwendbar, unterschiedliche Anschlusselemente (13, 13a, 13b), welche an der Rohlufteintrittsöffnung des Gehäuses adaptierbar sind und mindestens zwei wahlweise verwendbare, unterschiedliche Anschlusselemente (14, 14a, 14b), welche an der Reinluftaustrittsöffnung des Gehäuses adaptierbar sind, wobei diese Anschlusselemente (13, 13a, 13b, 14, 14a, 14b) zur Anpassung an die Struktur der Brennkraftmaschine dienen,
- mindestens zwei wahlweise verwendbare Deckel (11, 11a, 11b) von unterschiedlichen Formen zum Verschließen der dritten Öffnung des Gehäuses und
- mindestens zwei wahlweise verwendbare Filterelemente (12a, 12b, 12c) von unterschiedlichen Baulängen, zum Anordnen in das Gehäuse (10), wobei jedes Filterelement (12a, 12b, 12c) zwischen dem Gehäuse (10) und einem der Deckel (11, 11a, 11b), am Filterelement (12a, 12b, 12c) formmäßig abgestimmt, einspannbar ist.

2. Baukastensystem nach Anspruch 1, **dadurch gekennzeichnet, dass** eines der Filterelemente aus einem zickzackförmig gefalteten Papier (15) oder Vlies besteht, wobei an den Stirnseiten Endscheiben (16, 17) aus thermoplastischem Kunststoff vorgesehen sind, welche die Abdichtung zwischen Rohluftseite und Reinluftseite des Filters in Verbindung mit Flanschteilen (18, 19) bewirken.

3. Baukastensystem nach Anspruch 1, **dadurch gekennzeichnet, dass** das Gehäuse (10) und/oder der Deckel (11) und/oder die adaptierbaren Elemente (13, 13a, 13b, 14, 14a, 14b) aus thermoplastischem Kunststoff bestehen und miteinander verrastet oder verschweißt sind.

4. Baukastensystem nach Anspruch 1, **dadurch gekennzeichnet, dass** das Anschlusselement für den Rohlufteinlass (13, 13a, 13b) bzw. Reinluftauslass (14, 14a, 14b) ein sich in das Filtergehäuse (10) erstreckendes Dämpferrohr (15, 25) aufweist.

5. Baukastensystem nach Anspruch 1, **dadurch gekennzeichnet, dass** die an dem Gehäuse lösbar adaptierbaren Anschlusselemente (13, 13a, 13b, 14, 14a, 14b) mit einem Bajonettverschluss versehen sind.

6. Verwendung eines Baukastensystems nach einem der Ansprüche 1 bis 5 zum Zusammenbau eines Luftfilters für die Ansaugluft einer Brennkraftmaschine.

## Claims

1. Modular system for the assembly of an air filter for the intake air of internal combustion engines, wherein the modular system includes the following elements:
- a housing (10) with a first aperture for the unfiltered air inlet, a second aperture for the filtered air outlet and a third aperture for interchanging filter elements,
- at least two selectively usable, variable connecting elements (13, 13a, 13b), which are adaptable to the unfiltered air inlet aperture of the housing and at least two selectively usable, variable connecting elements (14, 14a, 14b), which are adaptable to the filtered air outlet aperture of the housing, wherein these connecting elements (13, 13a, 13b, 14, 14a, 14b) are for adaptation to the structure of the internal combustion engine,
- at least two selectively usable, variably formed covers (11, 11a, 11b) for closing the third aperture of the housing and
- at least two selectively usable filter elements (12a, 12b, 12c) varying in length, for the disposition in the housing (10), wherein each filter element (12a, 12b, 12c) is clampable between the housing (10) and one of the covers (11, 11a, 11b), with the form to match the filter element (12a, 12b, 12c).

2. Modular system according to claim 1, **characterised in that** one of the filter elements is formed from a paper (15) or non-woven fabric folded in a zigzag shape, wherein end discs (16, 17), which are made of thermoplastic plastics materials, are provided on the end faces, which end discs (16, 17) effect the seal between the unfiltered air side and the filtered air side of the filter in conjunction with flange parts (18, 19).

3. Modular system according to claim 1, **characterised in that** the housing (10) and/or the cover (11) and/or the adaptable elements (13, 13a, 13b, 14, 14a, 14b) are formed from thermoplastic plastics material and are interlocked or welded to each other.

4. Modular system according to claim 1, **characterised in that** the connecting element for the unfiltered air inlet (13, 13a, 13b) or respectively filtered air outlet (14, 14a, 14b) includes a damper pipe (15, 25) which extends into the filter housing (10).

5. Modular system according to claim 1, **characterised in that** the connecting elements (13, 13a, 13b, 14, 14a, 14b), which are adaptable in a detachable manner on the housing, are provided with a bayonet closure.

6. Use of a modular system according to one of claims 1 to 5 for the assembly of an air filter for the intake air of an internal combustion engine.

## Revendications

1. Système modulaire pour l'assemblage d'un filtre à air pour l'air d'admission de moteurs à combustion interne, le système modulaire présentant les éléments suivants :
- un carter (10) avec une première ouverture pour l'admission d'air brut, une deuxième ouverture pour la sortie d'air propre et une troisième ouverture pour remplacer des éléments filtrants,
- au moins deux éléments de raccordement différents (13, 13a, 13b) utilisables indifféremment, qui s'adaptent sur l'ouverture d'admission d'air brut du carter, et au moins deux éléments de raccordement différents (14, 14a, 14b) utilisables indifféremment, qui s'adaptent sur l'ouverture de sortie d'air propre du carter, ces éléments de raccordement (13, 13a, 13b, 14, 14a, 14b) servant à l'adaptation sur la structure du moteur à combustion interne,
- au moins deux couvercles (11, 11a, 11b) utilisables indifféremment de formes différentes pour fermer la troisième ouverture du carter, et
- au moins deux éléments filtrants (12a, 12b, 12c) de longueurs de construction différentes, utilisables indifféremment pour être disposés dans le carter (10), chaque élément filtrant (12a, 12b, 12c) pouvant être serré entre le carter (10) et l'un des couvercles (11, 11a, 11b) de forme adaptée à l'élément filtrant (12a, 12b, 12c).

2. Système modulaire selon la revendication 1,
**caractérisé en ce que**
l'un des éléments filtrants est en papier (15) ou en non-tissé plié en zigzag, dont les faces frontales comportent des rondelles d'extrémité (16, 17) en matière thermoplastique, qui assurent l'étanchéité entre le côté air brut et le côté air propre du filtre en liaison avec des éléments à bride (18, 19).

3. Système modulaire selon la revendication 1,
**caractérisé en ce que**
le carter (10) et/ou le couvercle (11) et/ou les éléments adaptables (13, 13a, 13b, 14, 14a, 14b) sont en matière thermoplastique et emboîtés ou soudés les uns aux autres.

4. Système modulaire selon la revendication 1,
**caractérisé en ce que**
l'élément de raccordement pour l'admission d'air brut (13, 13a, 13b), respectivement la sortie d'air propre (14, 14a, 14b) présente un tube amortisseur (15, 25) s'étendant dans le carter de filtre (10).

5. Système modulaire selon la revendication 1,
**caractérisé en ce que**
les éléments de raccordement (13, 13a, 13b, 14, 14a, 14b) adaptables de manière amovible au carter sont pourvus d'une fermeture à baïonnette.

6. Utilisation d'un système modulaire selon l'une des revendications 1 à 5, pour l'assemblage d'un filtre à air pour l'air d'admission d'un moteur à combustion interne.
